# EUROPÄISCHE PATENTSCHRIFT

(11) **EP 1 534 458 B1**
(45) Veröffentlichungstag und Bekanntmachung des Hinweises auf die Patenterteilung: **31.10.2007**
(21) Anmeldenummer: 03793459.3
(22) Anmeldetag: 03.09.2003
(51) Int. Cl.: B23K 11/31, B23K 11/25

(54) **VERFAHREN ZUR QUALITÄTSÜBERWACHUNG VON PUNKTSCHWEISSUNGEN**
METHOD FOR MONITORING THE QUALITY OF SPOT WELDING
PROCEDE DE CONTROLE DE QUALITE DE POINTS DE SOUDAGE

(30) Priorität: 06.09.2002 AT 13372002
(43) Veröffentlichungstag der Anmeldung: 01.06.2005
(73) Patentinhaber: Fronius International GmbH, 4643 Pettenbach (AT)
(72) Erfinder: STIEGLBAUER, Walter, A-4901 Manning (AT); WIMMER, Manfred, A-4600 Wels (AT); ZAUNER, Wolfgang, A-4600 Wels (AT)
(74) Vertreter: Sonn & Partner Patentanwälte
(86) Internationale Anmeldenummer: PCT/AT2003/000254
(87) Internationale Veröffentlichungsnummer: WO 2004/022278

(56) Entgegenhaltungen:
- EP-A- 0 830 914
- US-A- 4 782 230

## Beschreibung

Die Erfindung betrifft ein Verfahren zur Qualitätsüberwachung von Punktschweißungen, insbesondere für Roboteranwendungen, wie es in dem Oberbegriff des Anspruches 1 beschrieben ist.

Es sind bereits die unterschiedlichsten Systeme zum Bestimmen der Qualität eines Schweißpunktes bekannt, wie aus der EP 0 830 914 B1 zu entnehmen ist.

Die US 3 9406 24 A beschreibt eine Vorrichtung und ein Verfahren zur Überwachung von Schweißungen, wobei die Schweißstelle mit einer Infrarotlichtquelle bestrahlt wird und die resultierende reflektierte oder transmittierte Strahlung optisch erfasst wird. Gemäß einer Variante des beschriebenen Verfahrens wird ein Mylarfilm mit einem Flüssigkristall über die Schweißstelle gezogen und die aufgrund der Wärmestrahlung der Schweißstelle hervorgerufene Änderung des Flüssigkristalls optisch erfasst. Nachteilig dabei ist, dass der Schweißpunkt selbst oder die Flüssigkristallanzeige, welche jedoch nicht beständig ist, ausgewertet wird und somit eine ortsgebundene und zeitgebundene Messung notwendig ist.

Der Erfindung liegt die Aufgabe zu Grunde, ein Verfahren zur Qualitätsüberwachung von Punktschweißungen, insbesondere für Roboteranwendungen, zu schaffen, bei dem auf einfache Art eine Erfassung eines Schweißpunktes ermöglicht wird, wobei dies nicht direkt am zu verschweißenden Blech erfolgt.

Unter den Begriff Blech fallen alle möglichen mittels des Punktschweißverfahrens zu verbindende Werkstücke oder Bauteile, wie beispielsweise Autokarosserien. Unter Schweißpunkt fällt auch der in Fachkreisen übliche Begriff Schweißlinse.

Diese Aufgabe der Erfindung wird derartig gelöst, dass zwischen den Elektroden bzw. Elektrodenkappen und den Werkstücken, insbesondere den Blechen bzw. Bauteilen, ein Band bzw. eine Folie eingelegt wird, welches Band bzw. welche Folie nach einem Schweißprozess weiterbefördert wird, und wobei das Band bzw. die Folie derart ausgebildet wird, dass durch den Schweißprozess eine spiegelbildliche, insbesondere proportionale Abbildung bzw. ein Abdruck der am Werkstück geschaffenen Schweißlinse bzw. dem Schweißpunkt am Band bzw. an der Folie entsteht und diese spiegelbildliche Abbildung bzw. der Abdruck am Band bzw. auf der Folie von dem Auswertemittel erfasst und ausgewertet wird, wobei von dem Auswertemittel oder einer Steuer- und/oder Auswertevorrichtung eines Schweißgerätes durch die Abbildung bzw. den Abdruck auf die Größe, Form und Lage des Schweißpunktes bzw. der Schweißlinse rückgeschlossen wird. Durch die Weiterbeförderung des Bandes bzw. der Folie nach einem Schweißprozess wird gewährleistet, dass immer ein einziger Abdruck eines Schweißpunktes in einem bestimmten Bereich des Bandes gebildet wird. Vorteilhaft ist hierbei, dass die Auswertung zu einem beliebigen Zeitpunkt erfolgen kann, da durch die spiegelbildlichen Abdrücke am Band immer auf den entsprechenden Schweißpunkt am Werkstück bzw. am Blech rückgeschlossen werden kann. Ein weiterer wesentlicher Vorteil liegt darin, dass die Auswertung direkt an der Schweißzange erfolgen kann und somit Stillstandszeiten bei einer automatisierten Produktion verhindert werden. Von Vorteil ist dabei auch, dass nicht der Schweißpunkt am Werkstück bzw. am Blech selbst ausgewertet wird, sondern ein spiegelbildlicher Abdruck von dem Schweißpunkt herangezogen wird, sodass die Auswertung ortsungebunden erfolgen kann. Die Methode schließt viele Unsicherheiten, wie Elektrodenverschleiß, Variationen der Blechdicke bzw. Schichtdicke, chargenspezifische Materialschwankungen, usw., konventioneller Qualitätsüberwachungssysteme aus, da bei dem erfindungsgemäßen Verfahren die Größe, Form und Lage eines Abdruckes bzw. eines Abbildes des Schweißpunktes bzw. der Schweißlinse ermittelt wird. Ein Vorteil liegt auch darin, dass die Zugänglichkeit einer handelsüblichen Schweißzange nicht beeinträchtigt wird, da die Auswertung an bzw. auf der Schweißzange in einem Bereich fern vom Schweißprozess erfolgen kann, wogegen bei handelsüblichen Systemen, insbesondere bei Ultraschall-System, die Auswertung im Bereich des Schweißprozesses erfolgen muss und somit die Baugröße im Bereich der Elektrodenaufnahme vergrößert wird, wodurch das Handling und die Zugänglichkeit derartiger bekannter Systeme verschlechtert wird. Ein weiterer sehr wesentlicher Vorteil liegt darin, dass das Band gleichzeitig als Schutz für die Elektrode dient und somit die Standmenge der Elektrode wesentlich erhöht wird. Dadurch wird eine Hauptursache für mangelhafte Schweißpunkte (verschließene Elektroden) ausgeschaltet.

Zusätzlich ist es möglich und vorteilhaft, die Form und Lage des Schweißpunktes bzw. der Schweißlinse zu bestimmen und somit lässt sich die Relation der Längsfestigkeit zur Querfestigkeit bestimmen.

Von Vorteil sind auch Maßnahmen nach einem der Ansprüche 2 bis 5, da dadurch eine optimale Anpassung der Materialien aufeinander vorgenommen werden kann, sodass ein bestmöglicher Abdruck am Band gewährleistet ist.

Es sind auch die Maßnahmen nach Anspruch 6 von Vorteil, da dadurch je nach benötigter Dringlichkeit bzw. Notwendigkeit ein optimaler Arbeitsablauf durchgeführt werden kann. Es ist auch möglich, bestimmte Schweißpunkte sofort nach der Schweißung und andere erst nach dem Arbeitsablauf aller durchzuführenden Schweißungen auszuwerten.

Durch die Maßnahmen nach Anspruch 7 oder 8 wird in vorteilhafter Weise erreicht, dass bereits bekannte Systeme, insbesondere Software-Programme, zum Erfassen und Abmessen von Bildern oder Daten für die Bestimmung von Größe, Form und Lage eingesetzt werden können.

Von Vorteil sind auch die Maßnahmen nach den Ansprüchen 9 oder 10, da dadurch hinterlegte Referenzen herangezogen werden, welche für jeden individuellen Anwendungsfall hinterlegt werden. Eine derartige Referenz kann ein hinterlegtes Bild einer Normschweißstelle oder hinterlegte Parameter, wie Größe, Form oder Lage einer Normschweißstelle sein.

Vorteilhaft sind auch die Maßnahmen nach Anspruch 11, da dadurch eine Weiterverarbeitung bzw. ein Abruf der Daten jederzeit möglich ist.

Es sind auch die Maßnahmen nach Anspruch 12 von Vorteil, da dadurch das Auswertemittel nicht vor Ort, also direkt am Roboter, angeordnet werden muss.

Die Erfindung wird anschließend durch ein Ausführungsbeispiel näher beschrieben.
Es zeigen:
Fig. 1 eine schaubildliche Darstellung einer Punktschweißvorrichtung für das erfindungsgemäße Verfahren zur Qualitätsüberwachung von Punktschweißungen in vereinfachter, schematischer Darstellung;
Fig. 2 eine schaubildliche Darstellung eines durchgeführten Schweißprozesses mit einem Schnitt durch den Schweißpunkt, in vereinfachter, schematischer Darstellung.

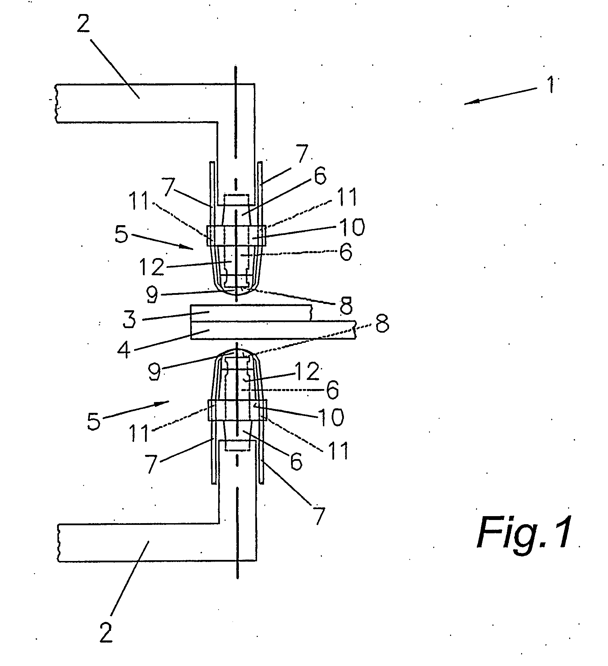

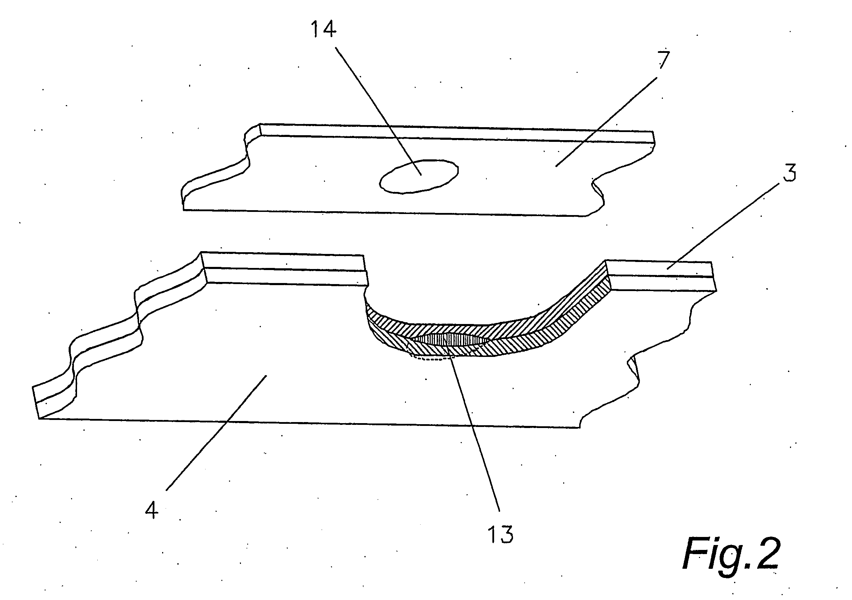

In den Fig. 1 und 2 ist eine Punktschweißvorrichtung 1, insbesondere eine Schweißzange 2, zum Widerstandsschweißen von Blechen 3, 4 oder Bauteilen gezeigt, wobei diese Punktschweißvorrichtung 1 bevorzugt für Roboteranwendungen eingesetzt wird. Bevorzugt wird die Punktschweißvorrichtung 1 mit einem Punktschweißwerkzeug 5 und mit einer Wickelvorrichtung, nicht dargestellt, zum Auf- und Abwickeln von einem an einer Elektrode 6 quer anliegenden Band 7 bzw. einer Folie ausgestattet, wobei die Wickelvorrichtung direkt an der Schweißzange 2 oder extern von dieser angeordnet ist.

Die Führung des Bandes 7 um die Elektrode 6 kann auf die verschiedensten Arten erfolgen, weshalb anschließend lediglich ein Ausführungsbeispiel kurz erläutert wird. Hierzu ist zu erwähnen, dass es bei einem derartigen Ausführungsbeispiel nicht erforderlich ist, ein Punktschweißwerkzeug 5 einzusetzen, sondern lediglich die Elektrode 6 vorhanden sein muss, wobei die weiteren Komponenten zum Führen und Auf- und Abwickeln des Bandes 7 als eigenständige Vorrichtungen ausgebildet und entsprechend angeordnet werden. Bei dem gezeigten Ausführungsbeispiel, ist um die Elektrode 6 im Bereich einer Elektrodenkappe 8 bzw. einer Kontaktfläche der Elektrode 6 mit dem Blech 3, 4 oder Bauteil ein Distanzhalter 9 angeordnet. Der Distanzhalter 9 ist beispielsweise beweglich an der Elektrode 6 befestigt, sodass über diesen das Werkstück bzw. die Bleche 3, 4 mit zusätzlichem Druck über den Distanzhalter 9 beaufschlagt werden können. Weiters wird durch die bewegliche Lagerung des Distanzhalters 9 erreicht, dass der Distanzhalter 9 das Band 7 nach einem Schweißprozess von der Elektrode 6 abhebt, d.h., dass der Distanzhalter 9 während oder nach dem Öffnen einer Schweißzange 2 das Band 7 von der Elektrodenoberfläche bzw. der Elektrodenkappe 8 beim Öffnen der Schweißzange 2 selbständig abhebt, wogegen beim Schließen der Schweißzange 2 der Distanzhalter 9 gegenüber der Elektrode 6 verschoben wird, wodurch das Band 7 an der Elektrode 6 zum Anliegen kommt.

Bei dem dargestellten Ausführungsbeispiel besteht das Punktschweißwerkzeug 5 aus einem ringförmigen Aufbau, das in die Schweißzange 2 eingesetzt wird, wobei der Distanzhalter 9 aus einem Metallring mit niedriger elektrischer Leitfähigkeit besteht, der axial an der zylindrischen Elektrode 6 verschiebbar ist. Im entlasteten Zustand überragt der Distanzhalter 9 die Elektrode 6. Weiters ist an der Elektrode 6 ein Stützelement 10 angeordnet, wobei dieses Führungskanäle 11 zur Aufnahme des Bandes 7 aufweist. Zwischen dem Stützelement 10 und dem Distanzhalter 9 ist ein Verstellmittel 12, insbesondere ein Federelement, angeordnet, wodurch der Distanzhalter 9 mit entsprechender Druckbeaufschlagung entlang der Elektrode 6 verschoben werden kann, wobei hierbei das Verstellmittel 12 verformt bzw. verfahren wird.

Durch die Schweißzange 2 werden während des gesamten Punktschweißprozesses die Teile, insbesondere die Bleche 3, 4, über die Elektroden 6 mechanisch aneinandergepresst. Beim Punktschweißprozess wird das zu verbindende Metall durch ohmsche Widerstandserwärmung aufgrund eines Stromflusses zwischen den Elektroden 6 schnell und für kurze Zeit aufgeschmolzen, wobei durch Wärmeleitung der aufgeschmolzene Bereich anschließend wieder schnell abkühlt und erstarrt und somit die Teile bzw. Bleche 3, 4 durch einen Schweißpunkt 13 bzw. eine Schweißlinse, wie schematisch in Fig. 2 dargestellt, miteinander verbunden sind.

Die entstehende Wärmemenge und somit das aufgeschmolzene Materialvolumen hängt von der Leitfähigkeit des Materials der Bleche 3, 4, von der Schweißzeit, vom Schweißstrom, genauer von der Stromdichte durch den gewünschten Schweißpunkt 13 bzw. der Schweißlinse, und den einzelnen Widerständen des Schweißstromkreises ab. Folgende Parameter bzw. Zustände müssen bei einem derartigen Schweißprozess berücksichtigt werden, die oft nur durch erheblichen Steuer- oder Regelaufwand ausgeglichen werden können oder überhaupt nicht überwacht bzw. darauf Einfluss genommen werden kann: Die elektrische und thermische Leitfähigkeit ist materialspezifisch aber weitgehend determiniert. Die Schweißzeit ist mit relativ geringem Aufwand einzuhalten. Der Schweißstrom kann durch Regelung konstant gehalten werden. Allerdings kann durch deformierte, insbesondere verschlissene, Elektroden 6 die Kontaktfläche zu groß und damit die Stromdichte zu klein werden. Außerdem kann durch vorhergegangene Schweißpunkte 13 oder Deformationen der Bleche 3, 4 Strom am gewünschten Schweißpunkt 13 vorbei fließen und nicht zur Materialaufschmelzung beitragen. Die Widerstände des Schweißstromkreises, insbesondere die überwiegenden Kontaktwiderstände unterliegen unvorhersehbaren und unkontrollierbaren Schwankungen, verursacht beispielsweise auch durch Verschmutzungen des Bleches 3, 4 oder der Elektrode 6. Weiters können schlechte Schweißpunkte 13 durch mangelhafte Positionierung der Schweißzange 2 oder der Bleche 3, 4 verursacht werden oder durch Deformationen der Bleche 3, 4, die verhindern, dass die Elektrode 6 das Blech 3 oder 4 oder die Bleche 3, 4 sich gegenseitig, wie notwendig, berühren. Oben genannte Gründe machen es dringend notwendig, die Schweißpunktqualität zu überwachen, insbesondere den Schweißpunkt 13 nach einem Schweißprozess zu kontrollieren.

Das erfindungsgemäße Verfahren zur Qualitätsüberwachung von Punktschweißungen basiert auf dem Prinzip, die Maximaltemperaturen mit ihrer geometrischen Ausbreitung an den Blechoberflächen, also den Schweißpunkt 13, zu erfassen. Dabei wird nicht, wie an sich bekannt, unmittelbar nach dem Schweißprozess die Temperaturverteilung an der Blechoberfläche gemessen, z.B.: mittels Wärmebildkamera oder durch eine optische Auswertung direkt am Werkstück bzw. am Blech 3, 4. Stattdessen liegt während der Schweißung eine gut leitfähige Folie bzw. das Band 7 zwischen Elektrode 6 und Blech 3, 4. Diese Folie bzw. das Band 7 verändert abhängig von der höchsten Temperatur an der jeweiligen Stelle ihre Eigenschaften. Das kann z.B. durch eine dünne Beschichtung erzielt werden, die unterhalb oder im Bereich der Schmelztemperatur des zu verschweißenden Materials der Bleche 3, 4 einen deutlich sichtbaren oder einen anderwärtig erfassbaren Eigenschaftswandel vollzieht oder selbst schmilzt. Die nach der Schweißung sichtbare oder messbare Veränderung ist ein Maß für die Schweißpunktgröße und kann mit vertretbarem Aufwand automatisiert ausgewertet werden.

Sowohl die verwendete Folie bzw. das Band 7 als auch deren eventuell vorhandene Beschichtung müssen gut elektrisch leitfähig sein, damit die Erwärmung des Bandes 7 zu einem möglichst großen Teil nicht direkt durch den Schweißstrom erfolgt, sondern vorzugsweise durch Wärmeleitung vom Blech 3, 4.

Wie bereits zuvor beschrieben, wird zwischen den Elektroden 6 bzw. Elektrodenkappen 8 und den Werkstücken, insbesondere den Blechen 3, 4 bzw. Bauteilen, das Band 7 bzw. eine Folie eingelegt, wobei das Band 7 bzw. die Folie derart ausgebildet wird, dass durch den Schweißprozess eine spiegelbildliche, insbesondere proportionale Abbildung bzw. ein Abdruck 14, wie schematisch in Fig. 2 dargestellt, der am Werkstück bzw. an den Blechen 3, 4 geschaffenen Schweißlinse bzw. dem Schweißpunkt 13 am Band 7 bzw. an der Folie entsteht. Diese spiegelbildliche Abbildung bzw. der Abdruck 14 am Band 7 bzw. auf der Folie wird von einem Auswertemittel (nicht dargestellt) erfasst und ausgewertet, wobei von dem Auswertemittel oder einer Steuer- und/oder Auswertevorrichtung eines Schweißgerätes (nicht dargestellt) durch die Abbildung bzw. den Abdruck 14 auf die Größe, Form und Lage des Schweißpunktes 13 bzw. der Schweißlinse rückgeschlossen wird. Das Auswertemittel kann dabei direkt an der Schweißzange 2 positioniert werden, sodass das Band 7 an diesem vorbeibewegt wird und somit die Auswertung vorgenommen werden kann. Selbstverständlich ist es möglich, das Auswertemittel extern anzuordnen.

Das Material des Bandes 7 bzw. der Folie oder eine darauf befindliche Beschichtung wird so auf die zu verschweißenden Materialien der Bleche 3, 4 abgestimmt, dass die bei der Schweißung auftretende Temperatur am Blech 3, 4 die Abbildung bzw. den Abdruck 14 am Band 7 ergibt, der oder die durch eine detektierbare Zustandsänderung, insbesondere eine Farbveränderung, Reaktion oder Änderung des Aggregatzustandes des Bandes 7 bzw. der Folie oder der darauf befindlichen Beschichtung entsteht. Damit ist ein Einsatz eines derartigen Verfahrens bei fast jedem Material möglich, da durch entsprechende Anpassung des Bandes 7 immer ein Abdruck 14 entsteht, der in einfacher Form ausgewertet werden kann. Es ist auch möglich, auf dem Band 7 bzw. auf der Folie eine Lackschicht aufzutragen, wobei die Lackschicht durch die generierte Temperatur des Schweißprozess schmilzt bzw. verdampft und wiederum eine spiegelbildliche, proportionale Abbildung bzw. ein Abdruck 14 geschaffen wird. Beispielsweise wird bei Verschweißung von Aluminium-Blechen 3, 4 bevorzugt ein Weißblech-Band 7 bzw. ein Band 7 mit einer Zinn-Beschichtung eingesetzt und bei Verschweißung von verzinkten Blechen 3, 4 bevorzugt ein Kupfer-Band 7 bzw. ein Band 7 mit einer Beschichtung aus Kupfer.

Wesentlich ist, dass das Band 7 nach jedem Schweißprozess weiterbewegt wird, sodass ein einziger Schweißpunkt 13 in einem Bereich am Band 7 entsteht und somit eine Zuordnung des am Band 7 entstehenden Abdruckes 14 zu einem bestimmten Schweißpunkt 13 am Blech 3, 4 gemacht werden kann. Die Auswertung des Bandes 7 wird beispielsweise nach jedem Schweißpunkt 13 oder nach einer beliebigen Anzahl von Schweißpunkten 13 durchgeführt.

Die Auswertung eines derartigen Abdruckes 14 kann auf die unterschiedlichsten Arten erfolgen. Wesentlich ist bei dem erfindungsgemäßen Verfahren, dass für die Bestimmung bzw. Überprüfung eines Schweißpunktes 13 ein spiegelbildlicher Abdruck 14 auf dem Band 7 bzw. Folie erzeugt wird, der dann anschließend ausgewertet wird und nicht, wie aus dem Stand der Technik bekannt, der Schweißpunkt 13 selbst herangezogen wird. Für die Auswertung bzw. Bestimmung der Größe, Form oder Lage der Schweißlinse bzw. des Schweißpunktes 13 wird beispielsweise vom Auswertemittel, insbesondere einer Kamera, ein optisches Bild erzeugt und eine Messung der Abmessungen des Bildes vom Abdruck 14 bzw. der Abbildung durchgeführt, wobei dies automatisch über entsprechende Software-Programme oder von Hand erfolgen kann.

Weiters ist es denkbar, dass durch die verbreitete Digitaltechnik, beispielsweise einer Digital-Kamera, für die Auswertung bzw. Bestimmung der Größe, Form oder Lage der Schweißlinse bzw. des Schweißpunktes 13 von dem Auswertemittel ein digitales Signal ausgegeben und dieses ausgewertet wird.

Die ermittelten Abmessungen der Abbildung bzw. des Abdruckes 13 werden bevorzugt mit einem hinterlegten Faktor multipliziert, um die tatsächlichen Abmessungen des Schweißpunktes 13 bzw. der Schweißlinse zu erhalten. Es ist auch möglich, die Abbildung bzw. den Abdruck 14 auf dem Band 7 zur Bewertung der Schweißlinse bzw. des Schweißpunktes 13 mit einer hinterlegten Referenz zu vergleichen. Anschließend ist es möglich, die ermittelten Abmessungen der Schweißlinse bzw. des Schweißpunktes 13 in einem Schweißprotokoll oder einer Datenbank aufzuzeichnen. Durch die Ermittlung der Größe, Form und Lage des Abdruckes 13 ist es anschließend möglich, durch entsprechende Weiterverarbeitung der Daten festzustellen, ob der erzeugte Schweißpunkt 13 in Ordnung ist. Derartige Auswertungen werden durch entsprechende Software-Programme vom Auswertemittel oder dem Schweißgerät selbst durchgeführt. Es ist auch möglich, dass am Ende eines Schweißprozesses, der aus mehreren Schweißpunkten 13 gebildet sein kann, das Band 7 bzw. die Folie von der Schweißzange 2 oder Punktschweißvorrichtung, insbesondere der Aufwickelvorrichtung, entfernt und in einer gesonderten Auswerteeinheit ausgewertet und auch archiviert wird. Die Zuordnung der einzelnen Abdrucke 14 am Band 7 zu den einzelnen Schweißpunkten 13 am Blech 3, 4 bzw. am Werkstück kann durch die Roboteranwendung leicht getroffen werden, da im Roboter exakt definiert ist, wo und in welcher Reihenfolge die Schweißpunkte 13 erzeugt werden.

Abschließend sei darauf hingewiesen, dass in den zuvor beschriebenen Ausführungsbeispielen einzelne Zustände bzw. Darstellungen unproportional dargestellt wurden, um das Verständnis der erfindungsgemäßen Lösung zu verbessern. Des Weiteren können auch einzelne Zustände bzw. Darstellungen der zuvor beschriebenen Merkmalskombinationen der einzelnen Ausführungsbeispiele in Verbindung mit anderen Einzelmerkmalen aus anderen Ausführungsbeispielen, eigenständige, erfindungsgemäße Lösungen bilden.

## Patentansprüche

1. Verfahren zur Qualitätsüberwachung von Punktschweißungen, insbesondere für Roboteranwendungen, bei dem über Punktschweißwerkzeuge Bleche miteinander verschweißt werden, wobei zumindest zwei Elektroden unter Zwischenlegung der Bleche, gegeneinander gepresst werden und mit Energie beaufschlagt werden und eine Bewertung des Schweißpunktes über ein Auswertemittel, insbesondere eine optische Visualisierung, durchgeführt wird, **dadurch gekennzeichnet, dass** zwischen den Elektroden (6) bzw. Elektrodenkappen (8) und den Blechen (3, 4) ein Band (7) bzw. eine Folie eingelegt wird, welches Band (7) nach einem Schweißprozess weiterbefördert wird, und wobei das Band (7) bzw. die Folie derart ausgebildet wird, dass durch den Schweißprozess eine spiegelbildliche, insbesondere proportionale Abbildung bzw. ein Abdruck (14) des am Werkstück geschaffenen Schweißpunkts (13) am Band (7) bzw. an der Folie entsteht und diese spiegelbildliche Abbildung bzw. dieser Abdruck (14) am Band (7) bzw. auf der Folie von dem Auswertemittel erfasst und ausgewertet wird, wobei von dem Auswertemittel oder einer Steuer- und/oder Auswertevorrichtung eines Schweißgerätes durch die Abbildung bzw. den Abdruck (14) auf die Größe, Form und Lage des Schweißpunktes (13) rückgeschlossen wird.

2. Verfahren nach Anspruch 1, **dadurch gekennzeichnet, dass** das Material des Bandes (7) bzw. der Folie oder eine darauf befindliche Beschichtung so auf die zu verschweißenden Materialien der Bleche (3, 4) abgestimmt wird, dass die bei der Schweißung auftretende Temperatur die Abbildung bzw. den Abdruck (14) ergibt, der bzw. die durch eine detektierbare Zustandsänderung, insbesondere eine Farbveränderung, Reaktion oder Änderung des Aggregatzustandes des Bandes (7) bzw. der Folie oder der darauf befindlichen Beschichtung entsteht.

3. Verfahren nach Anspruch 1 oder 2, **dadurch gekennzeichnet, dass** bei Verschweißung von Aluminium-Blechen (3, 4) bevorzugt ein Weißblech-Band (7) bzw. ein Band (7) mit einer Zinn-Beschichtung eingesetzt wird.

4. Verfahren nach Anspruch 1 oder 2, **dadurch gekennzeichnet, dass** bei Verschweißung von verzinkten Blechen (3, 4) bevorzugt ein Kupfer-Band (7) bzw. ein Band (7) mit einer Beschichtung aus Kupfer eingesetzt wird.

5. Verfahren nach einem der vorhergehenden Ansprüche, **dadurch gekennzeichnet, dass** auf dem Band (7) bzw. auf der Folie eine Lackschicht aufgetragen wird, wobei die Lackschicht durch die generierte Temperatur des Schweißprozesses schmilzt bzw. verdampft und somit wiederum eine spiegelbildliche, proportionale Abbildung bzw. ein Abdruck (14) geschaffen wird.

6. Verfahren nach einem der vorhergehenden Ansprüche, **dadurch gekennzeichnet, dass** die Auswertung des Bandes (7) nach jedem Schweißpunkt (13) oder nach einer beliebigen Anzahl von Schweißpunkten (13) durchgeführt wird.

7. Verfahren nach einem der vorhergehenden Ansprüche, **dadurch gekennzeichnet, dass** für die Auswertung bzw. Bestimmung der Größe, Form oder Lage des Schweißpunktes (13) von dem Auswertemittel, insbesondere einer Kamera, ein optisches Bild erzeugt wird und eine Messung der Abmessungen des Bildes vom Abdruck (14) bzw. der Abbildung erfolgt.

8. Verfahren nach einem der vorhergehenden Ansprüche, **dadurch gekennzeichnet, dass** für die Auswertung bzw. Bestimmung der Größe, Form oder Lage des Schweißpunktes (13) von dem Auswertemittel ein digitales Signal ausgegeben und dieses ausgewertet wird.

9. Verfahren nach einem der vorhergehenden Ansprüche, **dadurch gekennzeichnet, dass** die ermittelten Abmessungen der Abbildung bzw. des Abdruckes (14) bevorzugt mit einem hinterlegten Faktor multipliziert werden, um die tatsächlichen Abmessungen des Schweißpunktes (13) zu erhalten.

10. Verfahren nach einem der vorhergehenden Ansprüche, **dadurch gekennzeichnet, dass** die Abbildung bzw. der Abdruck (14) auf dem Band (7) zur Bewertung des Schweißpunktes (13) mit einer hinterlegten Referenz verglichen wird.

11. Verfahren nach einem der vorhergehenden Ansprüche, **dadurch gekennzeichnet, dass** die ermittelten Abmessungen des Schweißpunktes (13) in einem Schweißprotokoll oder einer Datenbank aufgezeichnet werden.

12. Verfahren nach einem der vorhergehenden Ansprüche, **dadurch gekennzeichnet, dass** am Ende eines Schweißprozesses, der aus mehreren Schweißpunkten (13) gebildet sein kann, das Band (7) bzw, die Folie von einer Schweißzange (2) oder Punktschweißvorrichtung entfernt wird und in einer gesonderten Auswerteeinheit ausgewertet wird.

## Claims

1. A method for monitoring the quality of spot welds, particularly for robotic applications, in which metal sheets are welded with each other via spot-welding tools, wherein at least two electrodes are pressed against each other with said metal sheets being arranged therebetween, and are supplied with power, and an assessment of the welding spot is carried out via an evaluation means and, in particular, optical visualization, **characterized in that** a strip (7) or foil is inserted between the electrodes (6) or electrode caps (8) and the metal sheets (3, 4), which strip (7) is conveyed on after a welding process, and wherein said strip (7) or foil is configured in a manner that a mirror-inverted, in particular, proportional image or reproduction (14) of the welding spot (13) produced on the workpiece is formed on the strip (7) or foil during the welding process and said mirror-inverted image or reproduction (14) formed on the strip (7) or foil is detected and evaluated by said evaluation means, with the size, shape and position of the welding spot (13) being concluded from said image or reproduction (14) by said evaluation means, or a control and/or evaluation device of a welding apparatus.

2. A method according to claim 1, **characterized in that** the material of the strip (7) or foil, or a coating applied thereon, is tuned to the materials of the metal sheets (3, 4) to be welded, so that the temperature occurring during welding produces the image or reproduction (14), which is formed on account of a detectable change in the condition, particularly color change, reaction or change in the aggregation state, of the strip (7) or foil, or of the coating applied thereon.

3. A method according to claim 1 or 2, **characterized in that**, when welding aluminum sheets (3, 4), a tinplate strip (7) or a strip (7) having a tin coating is preferably used.

4. A method according to claim 1 or 2, **characterized in that**, when welding zinc-coated sheets (3, 4), a copper strip (7) or a strip (7) having a coating of copper is used.

5. A method according to one of the preceding claims, **characterized in that** a coat of lacquer is applied on the strip (7) or foil, wherein the coat of lacquer melts or evaporates by the temperature generated by the welding process, thus forming again a mirror-inverted, proportional image or reproduction (14).

6. A method according to one of the preceding claims, **characterized in that** the evaluation of the strip (7) is carried out after every welding spot (13) or after any desired number of welding spots (13).

7. A method according to one of the preceding claims, **characterized in that** for the evaluation or determination of the size, shape or position of the welding spot (13), an optical picture is made by the evaluation means, particularly a camera, and the dimensions of the picture of the reproduction (14) or image are measured.

8. A method according to one of the preceding claims, **characterized in that** for the evaluation or determination of the size, shape or position of the welding spot (13), a digital signal is emitted by the evaluation means and is evaluated.

9. A method according to one of the preceding claims, **characterized in that** the determined dimensions of the image or reproduction (14) are preferably multiplied by a deposited factor in order to obtain the actual dimensions of the welding spot (13).

10. A method according to one of the preceding claims, **characterized in that** the image or reproduction (14) on the strip (7) is compared with a deposited reference in order to evaluate the welding point (13).

11. A method according to one of the preceding claims, **characterized in that** the determined dimensions of the welding spot (13) are recorded in a welding protocol or in a database.

12. A method according to one of the preceding claims, **characterized in that** the strip (7) or foil is removed from a welding tong (2) or spot-welding apparatus and evaluated in a separate evaluation unit at the end of a welding process, which may be formed by several welding spots (13).

## Revendications

1. Procédé de surveillance de la qualité de points de soudage, en particulier pour des applications robotisées, où des tôles sont soudées les unes sur les autres au moyen d'outils de soudage par points, au moins deux électrodes étant serrées l'une contre l'autre en serrant entre elles les tôles intercalées, et étant alimentées en énergie, et où une évaluation du point de soudage est effectuée par l'intermédiaire d'un moyen d'analyse, en particulier par l'intermédiaire d'une visualisation optique,
**caractérisé en ce qu'**une bande (7) ou un film est placé(e) entre les électrodes (6) ou les chapeaux d'électrodes (8) et les tôles (3, 4), ladite bande étant réacheminée ailleurs, après l'opération de soudage, et la bande (7) ou le film étant réalisé(e) de manière telle que l'opération de soudage crée sur la bande (7) ou le film une image ou empreinte (14) en miroir, notamment proportionnelle, du point de soudage (13) réalisé sur la pièce, et que cette image ou empreinte (14) en miroir laissée sur la bande (7) ou sur le film est détectée et analysée par le moyen d'analyse, une conclusion quant à la taille, la forme et la position du point de soudage (13) étant tirée à partir de l'image ou empreinte (14), par le moyen d'analyse ou un dispositif de commande et/ou d'analyse d'un appareil de soudage.

2. Procédé selon la revendication 1, **caractérisé en ce que** la matière de la bande (7) ou du film ou d'un revêtement appliqué sur celle-ci ou celui-ci est adaptée aux matières à souder des tôles (3, 4) d'une manière telle que la température rencontrée pendant le soudage produise l'image ou l'empreinte (14), qui sera provoquée par un changement d'état pouvant être détecté, notamment par un changement de couleur, une réaction ou un changement de l'état physique de la bande (7) ou du film ou du revêtement appliqué sur celle-ci ou celui-ci.

3. Procédé selon la revendication 1 ou 2, **caractérisé en ce que**, pour le soudage de tôles d'aluminium (3, 4), on utilise de préférence une bande (7) de fer blanc ou une bande (7) pourvue d'un revêtement d'étain.

4. Procédé selon la revendication 1 ou 2, **caractérisé en ce que**, pour le soudage de tôles zinguées (3, 4), on utilise de préférence une bande de cuivre (7) ou une bande (7) pourvue d'un revêtement de cuivre.

5. Procédé selon l'une des revendications précédentes, **caractérisé en ce qu'**une couche de vernis est déposée sur la bande (7) ou sur le film, le vernis étant amené à fondre, voire à s'évaporer sous la température générée par le processus de soudage, créant ainsi à nouveau une image ou empreinte (14) proportionnelle et en miroir.

6. Procédé selon l'une des revendications précédentes, **caractérisé en ce que** l'analyse de la bande (7) est effectuée après chaque point de soudure (13) ou après un nombre quelconque de points de soudure (13).

7. Procédé selon l'une de revendications précédentes, **caractérisé en ce qu'**en vue de l'analyse ou de la détermination de la taille, de la forme et de la position du point de soudure (13), le moyen d'analyse, notamment une caméra, produit une image optique, et qu'une mesure des dimensions de l'image de l'empreinte (14) ou de l'image est alors effectuée.

8. Procédé selon l'une des revendications précédentes, **caractérisé en ce qu'**en vue de l'analyse ou de la détermination de la taille, de la forme ou de la position du point de soudure (13), un signal numérique est produit par le moyen d'analyse, et que ce signal est analysé.

9. Procédé selon l'une des revendications précédentes, **caractérisé en ce que** les dimensions ainsi déterminées de l'image ou de l'empreinte (14) sont de préférence multipliées par un facteur enregistré de manière à obtenir les dimensions réelles du point de soudage (13).

10. Procédé selon l'une des revendications précédentes, **caractérisé en ce qu'**en vue d'évaluer le point de soudure (13), l'image ou l'empreinte (14) laissée sur la bande (7) est comparée à une référence enregistrée.

11. Procédé selon l'une des revendications précédentes, **caractérisé en ce que** les dimensions ainsi déterminées du point de soudure (13) sont consignées dans un procès verbal de soudage ou dans une base de données.

12. Procédé selon l'une des revendications précédentes, **caractérisé en ce qu'**à la fin d'un processus de soudage, qui peut comprendre plusieurs points de soudage (13), la bande (7) ou le film est retiré(e) d'une pince à souder (2) ou d'un dispositif de soudage par points, et est analysé(e) dans un dispositif d'analyse séparé.
